Europäisches Patentamt

European Patent Office

Office européen des brevets

(11) Numéro de publication : **0 333 578 B1**

# (12) FASCICULE DE BREVET EUROPEEN

(45) Date de publication du fascicule du brevet :
**20.05.92 Bulletin 92/21**

(21) Numéro de dépôt : **89400699.8**

(22) Date de dépôt : **14.03.89**

(51) Int. Cl.$^5$ : **G01C 19/04,** G01C 19/28

(54) Gyromètre à grande dynamique.

(30) Priorité : **16.03.88 FR 8803381**

(43) Date de publication de la demande :
**20.09.89 Bulletin 89/38**

(45) Mention de la délivrance du brevet :
**20.05.92 Bulletin 92/21**

(84) Etats contractants désignés :
**DE GB IT**

(56) Documents cités :
**DE-A- 2 363 525**
**US-A- 3 359 805**

(73) Titulaire : **SOCIETE DE FABRICATION
D'INSTRUMENTS DE MESURE (S.F.I.M.)
13, avenue Marcel Ramolfo-Garnier
F-91344 Massy Cédex (FR)**
Titulaire : **SOCIETE D'ETUDES ET
REALISATIONS ELECTRONIQUES
2, rue Alphonse-Kappler
F-92600 Asnieres (FR)**

(72) Inventeur : **Cattan, Gilles
28, rue du Moulin Ollainville
F-91290 Arpajon (FR)**
Inventeur : **Scicluna, Christian
18, rue A. Chandé
F-91070 Bondoufle (FR)**

(74) Mandataire : **Schrimpf, Robert et al
Cabinet Regimbeau 26, Avenue Kléber
F-75116 Paris (FR)**

## Description

La présente invention est relative à un gyromètre à grande dynamique.

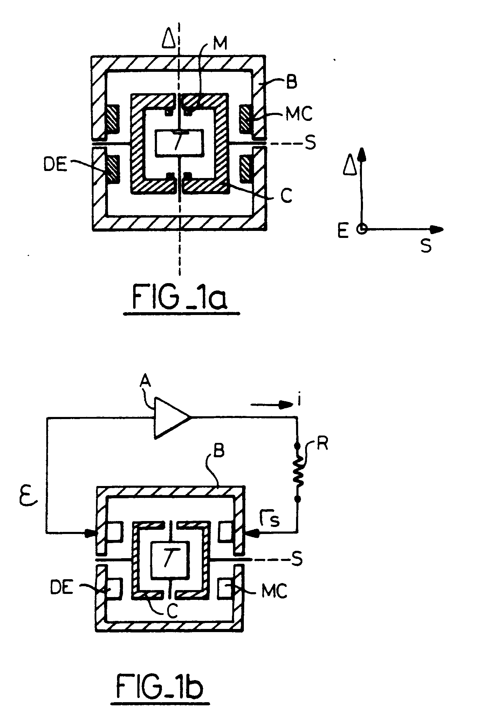

Les gyromètres utilisés de nos jours dans les applications les plus courantes comportent habituellement un gyroscope, tel que représente en figure 1a, comprenant un bôitier B dans lequel est monté un équipage mobile C, formant carter étanche par exemple, autour d'un axe à la cardan S par rapport au boîtier, cet axe étant dénommé axe de sortie. Une toupie T est montée mobile en rotation autour d'un axe $\Delta$ appelé axe de spin perpendiculaire à l'axe S et l'axe $\Delta$ de la toupie balaie ainsi un plan perpendiculaire à l'axe S. Un moteur électrique d'entraînement, non représenté permet de communiquer à la toupie T un moment cinétique donné par mise en rotation de la toupie T à vitesse élevée. Un détecteur d'écart de type inductif par exemple, noté DE, permet de mesurer l'écart angulaire $\varepsilon$ de l'équipage mobile C et de la toupie par rapport au boîtier B. Un moteur couple MC d'axe S permet d'appliquer à l'équipage mobile C un couple de composante $\Gamma s$ suivant l'axe S auquel correspond un couple de réaction - $\Gamma s$ appliqué au boîtier B. Ce système, gyroscope, présente une sensibilité particulière aux mouvements de rotation de la structure B autour d'un axe E orthogonal à l'axe S et à l'axe $\Delta$ et appelé axe d'entrée. On admet que le trièdre $\vec{E}, \ \vec{S}, \ \vec{\Delta}$ est un trièdre principal d'inertie de l'équipage mobile et de la toupie T, les axes S et $\Delta$ étant orthogonaux par construction, l'axe E étant supposé orthogonal au plan $\Delta$, S et réputé passer par l'intersection de l'axe $\Delta$ et de l'axe S, centre de masse de l'équipage mobile C et de la toupie T.

Lors d'un fonctionnement en gyroscope, le signal d'écart commande un moteur d'orientation du boîtier B et celui-ci suit l'orientation de l'axe de spin $\Delta$. En présence d'un mouvement relatif du boîtier B par rapport à l'axe de spin $\Delta$, cette variation de position ou écart angulaire est lue sur des résolveurs.

Lors d'un fonctionnement en gyromètre, le signal d'écart $\varepsilon$ commande directement le moteur couple MC par l'intermédiaire d'un élément amplificateur A. Une résistance de faible valeur R permet de mesurer l'intensité d'alimentation du moteur couple MC, laquelle est proportionnelle au couple $\Gamma s$ appliqué par le moteur couple MC et représentative de la vitesse angulaire relative $\Omega$ de l'équipage mobile C et du boîtier B. Les deux fonctionnements précités décrits dans le cas d'un gyroscope à un axe et du gyromètre correspondant correspondent également au fonctionnement des gyroscopes deux axes ou à deux degrés de liberté.

Dans les applications modernes des gyroscopes ou gyromètres à stabilisation de structures mécaniques importantes, telles que les fûts de canons de char d'assaut ou les platines support de caméras thermiques de poursuite de cible de missiles aéroportés, il est nécessaire au niveau du détecteur d'écart de disposer d'un signal à large bande passante et d'une large dynamique de mesure afin de permettre une grande souplesse d'utilisation dans un large domaine d'applications.

Lorsque les gyroscopes fonctionnent en gyroscope libre ainsi que décrit en liaison avec la figure 1a, le domaine de débattement du boîtier par rapport à l'axe de spin $\Delta$, de par le principe même du gyroscope, est limité, l'angle d'écart $\varepsilon$ ne pouvant dépasser $\pm 1°$.

Lorsque, au contraire, le gyroscope est adapté, ainsi que représenté en figure 1b, de façon à fonctionner en gyromètre, en raison notamment des conditions de bruit, la bande passante de l'angle de débattement du boîtier est nécessairement limitée entre 50 et 70 Hz et il n'est pas possible d'obtenir une bande passante large, le produit gain bande étant sensiblement constant pour des conditions de stabilité semblables.

Le gyromètre à grande dynamique objet de l'invention a pour objet de remédier aux inconvénients précités afin de permettre à la fois l'obtention d'un large domaine de débattement du boîtier, et de la structure à stabiliser en direction qui lui est associée, et d'une large bande passante du signal représentatif de l'orientation du boîtier.

Un autre objet du gyromètre à grande dynamique objet de l'invention est l'obtention d'un signal à large bande représentatif de la vitesse de rotation relative du boîtier par rapport à l'équipage mobile.

Un autre objet du gyromètre à grande dynamique objet de l'invention est de permettre l'obtention d'un signal à large bande, représentatif de l'orientation du boîtier filtré aux très basses fréquences.

Le gyromètre à grande dynamique selon l'invention est remarquable en ce qu'il comporte au moins un gyroscope comprenant une toupie supportée par un équipage mobile et entraînée par un moteur, ledit gyroscope étant bouclé en gyromètre à faible dynamique et permettant à partir du paramètre $\theta B$ d'entrée d'angle d'orientation du boîtier me surée par rapport à la direction $\Delta$ de l'axe de spin de la toupie d'engendrer au moyen d'un détecteur un signal d'erreur d'orientation dudit boîtier par rapport à la direction de l'axe de spin. Des moyens amplificateurs permettent à partir du signal d'erreur d'engendrer un signal de commande de l'intensité du moteur couple proportionnel au couple appliqué à l'équipage mobile supportant la toupie. Des moyens intégrateurs du signal de commande de l'intensité un moteur couple délivrent un signal d'erreur intégré à la première entrée de moyens sommateurs dont la deuxième entrée reçoit le signal d'erreur par l'intermédiaire d'un circuit de gain ajustable, les moyens sommateurs délivrent à leur sortie un signal d'angle d'orientation du boîtier à large bande.

Le gyromètre à grande dynamique selon l'invention trouve application notamment dans le domaine militaire et l'industrie de l'armement à la stabilisation et l'asservissement en direction du miroir de visée du viseur optique du canon d'un char d'assaut, de la platine support de la caméra thermique d'acquisition ou de poursuite de cible des missiles aéroportés par exemple.

L'invention sera mieux comprise à la lecture de la description et à l'observation des dessins dans lesquels outre les figures 1a et 1b relatives aux gyroscopes respectivement gyromètres de l'art antérieur :

– la figure 2a représente un schéma général du gyromètre à grande dynamique objet de l'invention ;

– la figure 2b représente, de manière synoptique, la fonction de transfert du gyromètre à grande dynamique objet de l'invention ;

– la figure 3 représente une utilisation particulière du gyromètre à grande dynamique selon l'invention.

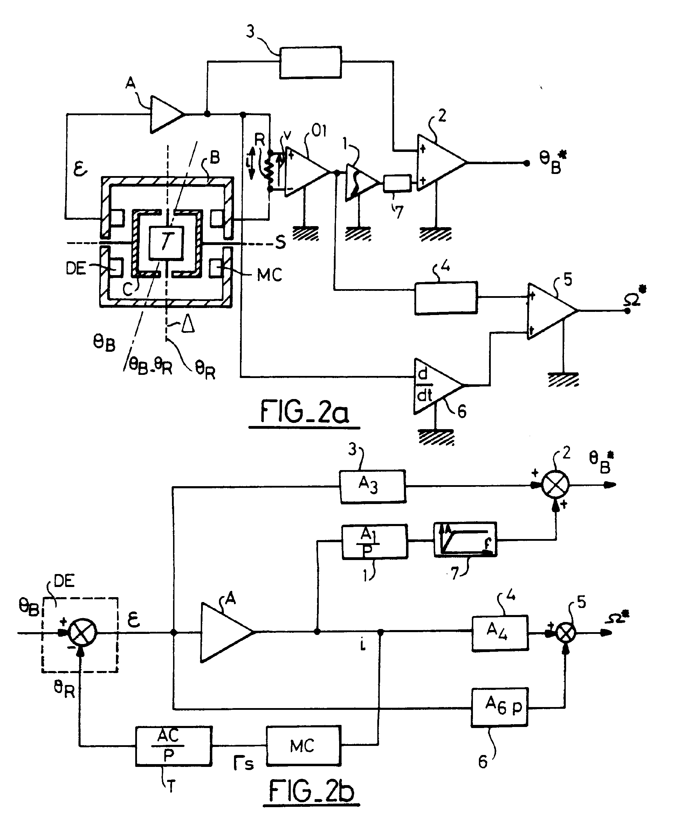

Le gyromètre à grande dynamique objet de la présente invention sera tout d'abord décrit en liaison avec la figure 2a.

Ainsi qu'on l'a représenté sur la figure précitée, le gyromètre à grande dynamique objet de l'invention comporte un gyroscope comprenant une toupie T supportée par un équipage mobile ou cadre noté C, la toupie T étant entraînée par un moteur M. Le gyroscope est de façon classique muni d'un moteur couple MC et est bouclé en gyromètre à faible bande passante ainsi que déjà décrit en liaison avec la figure 1b. Il permet à partir du paramètre d'entrée noté $\theta B$ d'angle d'orientation du boîtier B, angle mesuré par rapport à la direction $\theta R$ de l'axe de spin $\Delta$ de la toupie T, d'engendrer au moyen d'un détecteur noté DE un signal d'erreur d'orientation $\varepsilon$ du boîtier B par rapport à la direction d'axe de spin $\Delta$. Des moyens amplificateurs A permettent à partir du signal d'erreur $\varepsilon$ d'engendrer un signal de commande de l'intensité i du moteur couple MC. Le signal i est proportionnel au couple $\Gamma S$ appliqué à l'équipage mobile C supportant la toupie T.

Le gyroscope objet de l'invention ne sera pas décrit plus en détail car il correspond bien entendu, compte tenu du bouclage de celui-ci, à un gyromètre de type classique tel que par exemple le gyromètre commercialisé par la Demanderesse sous la référence

Ainsi qu'on l'a en outre représenté en figure 2a, le gyromètre à grande dynamique objet de l'invention comporte également des moyens intégrateurs notés 1 d'un signal v représentatif de l'intensité i du moteur couple MC. Des moyens sommateurs 2 sont prévus, ces derniers recevant sur une première entrée le signal délivré par les moyens intégrateurs 1 et sur une deuxième entrée le signal d'écart par l'intermédiaire d'un circuit de gain ajustable 3. Les moyens sommateurs 2 délivrent à leur sortie un signal noté $\theta B^*$ d'angle d'orientation du boîtier B à large bande.

Ainsi qu'on pourra le constater sur la figure 2a, et ce de manière non limitative et donnée à titre de seul exemple de réalisation, les moyens intégrateurs 1 permettent d'intégrer le signal v représentatif de l'intensité i du moteur couple MC par l'intermédiaire d'un amplificateur différentiel par exemple, noté 01, l'amplificateur différentiel précité présentant sa borne positive et sa borne négative connectées respectivement aux bornes de la résistance R de faible valeur permettant d'engendrer la tension v ou signal représentatif de l'intensité i du moteur couple MC. L'amplificateur différentiel 01 donne ainsi une tension proportionnelle à la tension ou signal v représentatif de l'intensité i du moteur couple.

De même, on remarquera sur la figure 2a que le circuit de gain ajustable 3 permet d'alimenter la deuxième borne positive des moyens sommateurs 2 à partir du signal d'écart $\varepsilon$ amplifié par l'amplificateur A et les gains ou atténuations du circuit de gain ajustable 3 et de l'amplificateur différentiel 01 sont bien entendu adaptés afin de calibrer le système.

En outre, le gyromètre à grande dynamique objet de l'invention comporte une sortie vitesse angulaire $\Omega$ vitesse de rotation de la direction d'orientation $\theta B$ du boîtier B rapport à l'axe de spin $\Delta$. La sortie de vitesse angulaire est délivrée à partir du signal v représentatif de l'intensité i du moteur couple MC par l'intermédiaire d'un circuit de gain ajustable 4.

En vue de constituer une sortie vitesse angulaire notée $\Omega^*$ à large bande, la sortie vitesse angulaire comporte en cascade avec le circuit de gain ajustable 4 un circuit sommateur ou additionneur 5 recevant sur une première entrée le signal délivré par le circuit de gain asjutable 4 et sur une deuxième entrée le signal d'écart $\varepsilon$ par l'intermédiaire d'un circuit différenciateur 6. De la même façon que précédemment, on pourra constater que, de préférence, le circuit différenciateur 6 transmet non pas le signal d'écart $\varepsilon$ mais le signal d'écart $\varepsilon$ amplifié par l'amplificateur A. Bien entendu, dans ce cas le gain en continu du circuit différenciateur 6 est adapté convenablement de façon à assurer la prise en compte de l'amplification par l'amplificateur A du signal d'écart $\varepsilon$ vis-à-vis du circuit de gain ajustable 4 transmettant la tension v ou signal représentatif de l'intensité du courant du moteur couple MC.

On notera également qu'en fonction des applications du gyromètre à grande dynamique objet de l'invention, et en vue de limiter la bande passante de la sortie délivrant le signal paramètre d'entrée, noté $\theta B^*$, d'angle d'orientation du boîtier à large bande en fonction de l'application considérée, les moyens intégrateurs 1 sont suivis par exemple par des moyens de filtrage 7 de type passe-haut limitant la bande de fréquence des signaux transmis de quelques Hertz aux fréquences les plus élevées. Les moyens de filtrage 7 de type passe-haut peuvent par exemple consister en un filtre passe-haut de fréquence de coupure 5 Hz et permettant la transmission des signaux de fréquence au moins égale à 150 à 200 Hz sans atténuation.

Du point de vue de la réalisation du gyromètre à grande dynamique objet de l'invention, on pourra noter que l'amplificateur différentiel 01 par exemple peut être constitué par un amplificateur différentiel du commerce de grande performance, un amplificateur différentiel à compensation de tension de décalage de zéro par exemple. Les moyens intégrateurs peuvent être réalisés de manière classique par un amplificateur différentiel bouclé en intégrateur. Il en est de même pour les moyens différenciateurs 6 lesquels peuvent être réalisés au moyen d'un amplificateur différentiel bouclé en différenciateur. Ces deux derniers circuits ne seront pas décrits en détail car ils sont largement connus de l'homme de métier. En ce qui concerne les circuits de gain ajustable 3 et 4 par exemple ces derniers peuvent être réalisés par des amplificateurs de gain variable par exemple ou par des atténuateurs. Les moyens sommateurs 2 et 5 peuvent enfin être réalisés au moyen d'amplificateurs sommateurs à partir d'amplificateurs opérationnels de manière la plus classique.

Une description plus détaillée de la fonction de transfert du gyromètre à grande dynamique objet de l'invention sera maintenant donnée en liaison avec la figure 2b.

Sur la figure précitée on a noté par A le gain de l'amplificateur A, la fonction de transfert du moteur couple MC étant notée symboliquement MC et permettant de transformer l'intensité du courant stator de celui-ci en la valeur de couple $\Gamma s$ appliqué sur le cadre ou équipage mobile C, la fonction de transfert de celui-ci étant notée. $\frac{Ac}{p}$ où p désigne la variable de la transformée de Laplace.

De la même manière, la fonction de transfert des moyens intégrateurs 1 a été notée $\frac{A1}{p}$, la fonction de transfert des moyens différenciateurs 6 a été notée de la même façon A6.p où p représente la variable de la transformée de Laplace. Les fonctions de transfert des circuits de gain ajustable 3 et 4 ont été notées respectivement A3 et A4. Les moyens sommateurs 2 et 5 ont été représentés de manière classique selon la représentation symbolique et le détecteur DE a été représenté selon la manière symbolique correspondante des soustracteurs. Les moyens de filtrage 7 ont été représentés selon la représentation correspondante de la fonction de transfert d'un filtre passe-haut dans un diagramme amplitude A fréquence f.

A partir de la fonction de transfert représentée en figure 2b on peut montrer :

$$\text{Relation (1)} : \frac{i}{\theta B} = \frac{A}{1 + \frac{A}{p}} = \frac{A.p}{A + p}$$

$$\text{Relation (2)} : \frac{\varepsilon}{\theta B} = \frac{1}{1 + \frac{A}{p}} = \frac{p}{A + p}$$

$$\text{Relation (3)} : \theta B^* = \frac{i}{p} + \varepsilon = \left( \frac{A}{A+p} + \frac{p}{A+p} \right) . \theta B ; \Rightarrow \frac{\theta B^*}{\theta B} = 1$$

La relation 3 montre que le signal $\theta B^*$ est identique au signal d'entrée $\theta B$ représentatif de l'angle d'orientation du boîtier B par rapport à l'axe de spin $\Delta$ mais le signal $\theta B^*$ est à large bande.

Dans le calcul précédent on a bien entendu considéré que les circuits de gain ajustable A3, le gain en continu de l'intégrateur A1 par exemple sont déterminés de façon à effectuer la correction d'échelle nécessaire pour avoir l'identité d'amplitude du signal $\theta B^*$ et du signal $\theta B$.

On a ainsi décrit un gyromètre à grande dynamique particulièrement intéressant dans la mesure où celui-ci permet de conserver les performances de débattement de l'angle d'orientation du boîtier B par rapport à l'axe de spin $\Delta$ des gyromètres de l'art antérieur, sans présenter les inconvénients de ces derniers puisque le signal représentatif de cet angle d'orientation obtenu $\theta B^*$ est à large bande.

Bien entendu, la réalisation matérielle du gyroscope bouclé en gyromètre pour constituer un gyromètre de type classique tel que représenté en figure 2a ne sera pas décrite en détail car cette réalisation est parfaitement connue de l'homme du métier, tout gyromètre normalement disponible dans le commerce pouvant être utilisé.

On notera enfin que la description du gyromètre à grande dynamique objet de l'invention a été faite en se limitant à un seul axe ou degré de liberté mais il va de soi que des gyromètres à deux axes ou deux degrés de liberté peuvent bien entendu être utilisés, les circuits correspondants à ceux de la figure 2a étant alors reproduits pour chaque axe correspondant. On notera en outre que les bouclages représentés sur les figures 2a et 2b sont réalisés à titre d'exemple non limitatif par des circuits analogiques. Les sorties écart ou vitesse sont alors des tensions continues. Il va également de soi que le gyromètre à grande dynamique objet de l'invention peut être réalisé à partir d'un gyromètre de type classique à faible dynamique auquel sont ajoutés par exemple des circuits d'échantillonnage des variables précitées afin de réaliser le traitement des signaux correspondants pour réaliser les sommations et traitements par intégration ou différenciation de manière numérique en temps réel. Il va de soi que dans ce cas, des moyens de calcul adaptés sont utilisés.

Le gyromètre à grande dynamique objet de l'invention précédemment décrit peut être utilisé par exemple pour la commande du miroir de visée du viseur optique d'un canon de char d'assaut ou de la caméra thermique de veille ou de poursuite de cible d'un missile aéroporté.

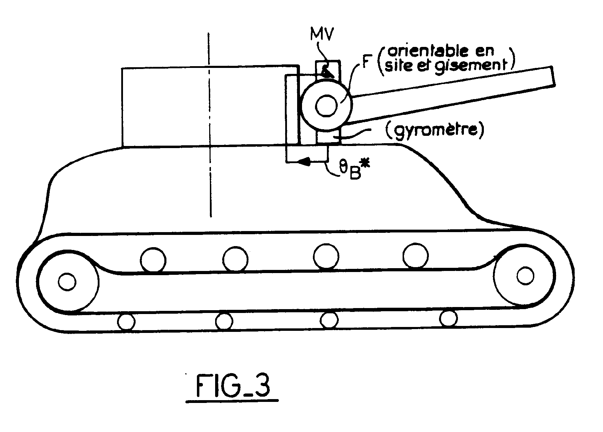

Dans le cas d'une utilisation pour la commande du miroir de visée du viseur optique d'un canon de char d'assaut, le gyromètre objet de l'invention et en particulier le boîtier B de celui-ci sont montés mécaniquement solidaires d'une structure telle que le fût d'orientation noté F du canon du char d'assaut. La sortie délivrant le signal θB* d'angle d'orientation du boîtier B à large bande est alors directement connectée à l'entrée de commande du moteur d'orientation du miroir de visée noté MV. Un schéma fonctionnel correspondant est représenté en figure 3.

Bien entendu le gyromètre à grande dynamique objet de l'invention n'est pas limité aux utilisations précitées et peut être utilisé pour toute sorte de stabilisation ou d'asservissement en orientation de systèmes mécaniques les plus divers et en particulier de systèmes mécaniques imposants et massifs pour lesquels seuls les signaux à fréquence très basse ne doivent pas faire l'objet d'une régulation.

## Revendications

1. Gyromètre à grande dynamique, comportant :
   – un gyroscope, comprenant une toupie (T) supportée par un équipage mobile et entraînée par un moteur (M), ledit gyroscope muni d'un moteur couple MC étant bouclé en gyromètre à faible bande passante permettant, à partir des paramètres d'entrée (θB) d'angle d'orientation du boîtier mesuré par rapport à la direction (θR) de l'axe de spin (Δ) de la toupie (T), d'engendrer au moyen d'un détecteur (DE) un signal d'écart d'orientation (ε) dudit boîtier (B) par rapport à la direction d'axe de spin (Δ), des moyens amplificateurs (A) permettant à partir dudit signal d'écart (ε) d'engendrer un signal de commande de l'intensité (i) du moteur couple (MC) proportionnel au couple (Γ s) appliqué à l'équipage mobile supportant la toupie (T); caractérisé en ce qu'il comporte en outre :
   – des moyens intégrateurs (1) d'un signal (v) représentatif de l'intensité (i) du moteur couple ;
   – des moyens sommateurs (2) recevant sur une première entrée le signal délivré par lesdits moyens intégrateurs et sur une deuxième entrée ledit signal d'écart (ε) par l'intermédiaire d'un circuit de gain ajustable (3), lesdits moyens sommateurs délivrant à leur sortie un signal (θB*) d'angle d'orientation du boîtier (B) à large bande.

2. Gyromètre selon la revendicaiton 1, caractérisé en ce qu'il comprend en outre une sortie vitesse angulaire (Ω), ladite sortie de vitesse angulaire étant délivrée à partir du signal (v) représentatif de l'intensité i du moteur couple (MC) par l'intermédiaire d'un circuit de gain ajustable (4).

3. Gyromètre selon la revendication 2, caractérisé en ce que, en vue de constituer une sortie vitesse angulaire (Ω*) à large bande, ladite sortie vitesse angulaire comporte en cascade avec ledit circuit de gain ajustable (4) un circuit additionneur (5) recevant sur une première entrée le signal délivré par ledit circuit de gain ajustable (4) et sur une deuxième entrée ledit signal d'écart (ε) par l'intermédiaire d'un circuit différenciateur (6).

4. Gyromètre selon l'une revendications 1 à 3, caractérisé en ce que, en vue de limiter la bande passante de la sortie délivrant le signal paramètre d'entrée (θB*) d'angle d'orientation du boîtier à large bande, lesdits moyens intégrateurs (1) sont suivis par des moyens de filtrage (7) de type passe-haut limitant la bande de fréquence des signaux transmis de quelques Hertz aux fréquences les plus élevées.

5. Utilisation d'un gyromètre à grande dynamique selon l'une des revendications précédentes pour la commande du miroir de visée du viseur optique d'un canon de char d'assaut, ou de la caméra thermique de veille ou de poursuite de cible d'un missile aéroporté.

6. Utilisation selon la revendication 5, caractérisé en ce que ledit gyromètre et le boîtier de celui-ci étant montés mécaniquement solidaires d'une structure telle que le fût d'orientation du canon d'un char d'assaut, ladite sortie délivrant le signal (θB*) d'angle d'orientation du boîtier (B) à large bande est directement connectée à l'entrée de commande du moteur d'orientation du miroir de visée (MV).

**Patentansprüche**

1. Gyrometer mit großer Dynamik, bestehend aus:
– einem Gyroskop, das einen von einem beweglichen Bauteil getragenen und durch einen Motor (M) angetriebenen Kreisel (T) enthält, wobei das mit einem im Gyrometer mit geringer Bandbreite eingeschleiften Drehmomentmotor MC ausgerüstete Gyroskop aufgrund von Eingangsparametern ($\theta$B) eines bezüglich der Richtung ($\theta$R) der Drehimpulsachse (4) des Kreisels (T) gemessenen Gehäusekippwinkels mit Hilfe eines Detektors (DE) ein Signal ($\varepsilon$) der Abweichung der Orientierung des Gehäuses (B) von der Richtung der Drehimpulsachse ($\Delta$) zu erzeugen gestattet und wobei es Verstärkermittel (A) aufgrund des Abwei-chungssignals ($\varepsilon$) erlauben, ein Steuersignal der Intensität (i) des Drehmomentmotors (MC) proportional zu dem Drehmoment ($\Gamma$s), das auf das den Kreisel tragende Bauteil einwirkt, zu erzeugen, dadurch gekennzeichnet, daß das Gyrometer des weiteren enthält:
– Mittel (1) zur Integration eines die Intensität (i) des Drehmomentmotors repräsentierenden Signals (v),
– Summationsmittel (2), die an einem ersten Eingang das von den Integrationsmitteln gelieferte Signal und an einem zweiten Eingang unter Zwischenfügung einer Schaltung mit anpaßbarer Verstärkung das Abwei-chungssignal ($\varepsilon$) empfangen, wobei die Summationsmittel an ihrem Ausgang ein breitbandiges Signal ($\theta$B*) des Kippwinkels des Gehäuses (B) abgeben.

2. Gyrometer nach Anspruch 1, dadurch gekennzeichnet, daß es des weiteren eine Winkelgeschwindigkeitsausgabe aufweist, wobei diese Ausgabe aufgrund des die Intensität i des Drehmomentmotors (MC) repräsentierenden Signals (v) unter Zwischenfügung der Schaltung mit anpaßbarer Verstärkung (4) geliefert wird.

3. Gyrometer nach Anspruch 2, dadurch gekennzeichnet, daß zwecks Schaffung einer breitbandigen Win-kelgeschwindigkeitsausgabe ($\Omega$*) die Ausgabe der Winkelgeschwindigkeit in Kaskade mit der Schaltung mit anpaßbarer Verstärkung (4) eine Additionsschaltung (5) umfaßt, die an einem ersten Eingang das durch die Schaltung mit anpaßbarer Verstärkung (4) gelieferte Signal und an einem zweiten Eingang unter Zwischenfügung einer Differenzierungsschaltung (6) das Abweichungssignal ($\varepsilon$) empfängt.

4. Gyrometer nach einem der Ansprüche 1 bis 3, dadurch gekennzeichnet, daß sich zwecks Begrenzung der Bandbreite der Ausgabe, die das breitbandige Eingangsparametersignal ($\theta$B*) des Gehäusekippwinkels liefert, an die Integrationsmittel (1) Mittel zur Hochpaßfilterung (7) anschließen, die die Frequenzbandbreite der übertragenen Signale von einigen Hertz bis zu höchsten Frequenzen einschränken.

5. Verwendung eines Gyrometers mit großer Dynamik nach einem der vorausgegangenen Ansprüche für die Steuerung eines Beobachtungsspiegels einer optischen Zielvorrichtung für ein Geschütz eines schweren Kampfwagens oder einer Wärmebild-Beobachtungskamera oder einer Nachführung der Zielscheibe einer flugfähigen Lenkwaffe.

6. Verwendung nach Anspruch 5, dadurch gekennzeichnet, daß bei mechanisch einstückiger Anordnung des Gyrometers und dessen Gehäuses an einer Struktur, wie einem Drehgestell des Geschützes eines schweren Kampfwagens, die Ausgabe, die das breitbandige Signal ($\theta$B*) des Kippwinkels des Gehäuses (B) liefert, direkt mit dem Eingang eines Motorantriebs für die Ausrichtung des Beobachtungsspiegels (MV) verbunden ist.

**Claims**

1.Highly dynamic gyrometer, having:
– a gyroscope, comprising a top (T) supported by a mobile mounting and driven by a motor (M), the said gyroscope equipped with a torque motor (MC) being looped in a low-passband gyrometer allowing the gen-eration, from input parameters ($\theta$B) of angle of orientation of the casing measured with respect to the direc-tion ($\theta$R) of the axis of spin (4) of the top (T), by means of a detector (DE), of a signal of the deviation in orientation ($\varepsilon$) of the said casing (B) with respect to the direction of the axis of spin (4), amplifier means (A) allowing the generation, from the said deviation signal ($\varepsilon$), of a signal controlling the intensity (i) of the torque motor (MC) proportional to the torque ($\Gamma$s) applied to the mobile mounting supporting the top (T); characterized in that it further has:
– means (1) integrating a signal (v) representing the intensity (i) of the torque motor;
– summer means (2) receiving via a first input the signal supplied by the said integrating means and via a second input the said deviation means ($\varepsilon$) by way of an adjustable gain circuit (3), the said summer means supplying at their output a wide-band signal ($\theta$B*) of the angle of orientation of the casing (B).

2. Gyrometer according to Claim 1, characterized in that it further comprises an angular velocity output ($\Omega$), the said angular velocity output being supplied from the signal (v) representing the intensity i of the torque motor (MC) by way of an adjustable gain circuit (4).

3. Gyrometer according to Claim 2, characterized in that, in order to form a wide-band angular velocity output ($\Omega^*$), the said angular velocity output has, in cascade with the said adjustable gain circuit (4), an adder circuit (5) receiving via a first input the signal supplied by the said adjustable gain circuit (4) and via a second input the said deviation signal ($\varepsilon$) by way of a differentiating circuit (6).

4. Gyrometer according to one of Claims 1 to 3, characterized in that, in order to limit the passband of the output supplying the wide-band input parameter signal ($\theta B^*$), of the angle of orientation of the casing, the said integrating means (1) are followed by filtering means (7) of the high-pass type limiting the frequency band of the signals transmitted from a few hertz to the highest frequencies.

5. Use of a highly dynamic gyrometer according to one of the preceding claims for the control of the sight reflector of the view finder of a cannon of a tank, or of the target tracking or surveillance heat-sensitive camera of an air-borne missile.

6. Use according to Claim 5, characterized in that, the said gyrometer and the casing thereof being mounted mechanically integral with a structure such as the orientation barrel of the cannon of a tank, the said output supplying the wide-band signal ($\theta B^*$) of the angle of orientation of the casing (B) is directly connected to the control input of the motor of orientation of the sight reflector (MV).

FIG_1a

FIG_1b

FIG_2a

FIG_2b

MV

F (orientable en site et gisement)

(gyromètre)

$\theta_B^*$

FIG_3